# EUROPEAN PATENT SPECIFICATION

(11) **EP 4 027 675 B1**
(45) Date of publication and mention of the grant of the patent: **11.06.2025**
(21) Application number: 21150620.9
(22) Date of filing: 07.01.2021
(51) Int. Cl.: H04L 9/40, H04W 12/06, H04W 12/48, H04W 4/70, H04W 12/71, H04W 12/72

(54) **SYSTEM AND METHOD FOR AUTHENTICATION OF IOT DEVICES**
SYSTEM UND VERFAHREN ZUR AUTHENTIFIZIERUNG VON IOT-VORRICHTUNGEN
SYSTÈME ET PROCÉDÉ D'AUTHENTIFICATION DE DISPOSITIFS D'IDO

(43) Date of publication of application: 13.07.2022
(73) Proprietor: Deutsche Telekom AG, 53113 Bonn (DE)
(72) Inventor: LORENZ, Andreas, 53332 Bornheim (DE); VORNHOLT, Kolja, 53113 Bonn (DE)
(74) Representative: RDL Patentanwälte PartG mbB

(56) References cited:
- EP-A1- 3 681 185
- WO-A1-2018/011078
- US-A1- 2020 045 541

## Description

The present invention relates to an loT-authentication server, an authentication system and an authentication method for authentication of a network device with a SIM-card.

In the so-called "Internet of things" (IoT), network devices are configured to communicate with other devices in order to receive and transmit data packages, such as measurement data or control commands. In order to avoid misuse of data sent between particular network devices and to provide for a secure communication, a reliable authentication of a particular network device is necessary.

One possibility for authentication is the use of pre-determined Pre-Shared Keys (PSK), which are known to the respective communication partners. To ensure unique authentication, the PSKs must be specific to a certain constellation of an loT device with a target system, such as an loT platform, a cloud or any other server.

When loT devices are produced, they are provided with a unique identifier, such as an International Mobile Equipment Identity (IMEI). Depositing PSK on loT devices is complex and costly.

On the one hand, an independent key must be stored on each device during production, which makes an automated process difficult. On the other hand, the keys stored on the devices must also be stored with the target system later on, which requires a secure exchange.

Further, at the time of production of an loT device, a target system is usually not yet known. This is why a reverse method of generating the keys in the target system and handing them over to the device manufacturer for storage on the device also fails.

When using public communication networks, IoT devices are equipped with SIM-cards to authenticate themselves on the public network. To prevent unauthorized persons from reading and using data stored on a SIM-card, the data on the SIM-card is encrypted and must be decrypted by entering a PIN.

PIN entry is not possible for mass commissioning of networked small devices in the loT range, as there are often no input interfaces on the device at all, making entry by a user impossible. A previous entry before delivery of the device to the customer fails at the same points as the deposit of PSK directly on the device. For this reason, PIN entry is usually deactivated on SIM-cards used in the loT area (M2M-SIM-card).

By depositing the IMEI of a device to be used in a target system, the security level can be improved and use in another device can be prevented as long as the IMEI is confidential. However, the transmission of pre-shared keys to an IoT device is insecure by writing them to a M2M-SIM-card. Due to the lack of a PIN request, information stored on a M2M-SIM-card can be read by any person who has access to the M2M-SIM-card itself or a copy of the M2M-SIM-card.

A security level based on a combination of a device-ID is limited to the level of confidentiality of the device-ID. Since the authenticity of the device-ID provided by an application cannot be verified, an authentication system can be overcome by trying different device-IDs for particular key-secret combinations read from a M2M-SIM-card.

WO 2018/011078 A1 describes a method of dual-network communication for a communication device.

Against this background, it is a problem to be solved by the invention disclosed herein, to provide for a reliable authentication of loT-devices at a target server.

The above identified problem is solved by the subject-matter of the independent claims.

According to a first aspect, the present invention relates to an loT-authentication server for authentication of a network device with a SIM-card. The loT-authentication server comprises a processor configured to store a dataset linking a unique identification of the SIM-card and a given set of specific credentials in a memory of the loT-authentication server, to receive an authentication request comprising a candidate unique identification of the network device and a candidate set of credentials, to retrieve a unique identification of the network device specified in a network layer of a public communication network transmitting the authentication request and to generate an authentication-label for labelling the network device as authenticated only in case the unique identification of the network device specified in the network layer of the public communication network transmitting the authentication request matches the candidate unique identification of the network device specified in the authentication request, and the candidate set of credentials transmitted to the loT-authentication server from the network device using the SIM-card matches the specific credentials linked with the unique identification of the SIM-card in the dataset.

In the context of the present invention, a network device may be a so-called Internet of Things (IoT) device with a SIM-card for communication via a public wireless network, such as a GSM-network, for example. The SIM-card of a network device may be a so-called M2M-SIM-card.

In the context of the present invention, an authentication request is a message for requesting an authentication process to verify the identity of a communication partner in a communication network.

In the context of the present invention, a public communication network is a network for communication of mobile phones, such as GSM-, 4G-, 5G-network, or the like. A public communication network is accessed via a SIM-card for communication with a network server of the public communication network.

The present invention is based on an authentication of a network device by using information available to a provider of a public communication network only. Thus, any existing network device can be authenticated based on the present invention, in particular the loT-authentication server described herein.

In order to maximize the validity of an authentication label provided by the loT-authentication server described herein, two authentication procedures are implemented in the loT-authentication server that may be used in combination or independent from each other.

A first authentication procedure is based on a set of credentials, such as a key and a secret, that are specific for a particular SIM-card used by a particular network device. Thus, the set of credentials is linked with a unique identification of the SIM-card, such as an International Mobile Subscriber Identity (IMSI), for example. This link between the specific, i.e. unique and exclusive set of credentials with the unique identification of the SIM-card is stored in a dataset in a memory of the loT-authentication server described herein.

In case the loT-authentication server receives an authentication request via a public communication network using a SIM-Card, the loT-authentication server reads the unique identification of the SIM-card and a candidate set of credentials from a message transmitting the authentication request and checks whether the candidate set of credentials matches the specific credentials linked with the unique identification of the SIM-card in the dataset stored in the memory of the loT-authentication server.

According to the first procedure, only in case the candidate set of credentials matches the specific credentials linked with the unique identification of the SIM-card in the dataset stored in the memory of the loT-authentication server, an authentication label is created for the network device and the network device is allowed to communicate with a respective target server, for example.

A second authentication procedure is based on information of a message transmitting an authentication request itself. Therefore, a unique identification of the network device specified in a network layer of a public communication network transmitting the authentication request is extracted by the loT-authentication server and compared with a candidate unique identification of the network device specified in the authentication request, i.e. in the message itself. In other words, a candidate unique identification of the network device specified in an application layer of a public communication network is compared with a unique identification of the network device used for the network device in a network layer of the public communication network.

According to the second procedure, only in case the candidate unique identification of the network device specified in the authentication request, i.e. in the message transmitted from the network device to the loT-authentication server matches the unique identification of the network device specified in the network layer of the public communication network, an authentication label is created for the network device and the network device is allowed to communicate with a respective target server, for example.

According to an embodiment, the first procedure and the second procedure may be carried out in combination and/or exclusively by the loT-authentication server.

According to an embodiment, the processor of the loT-authentication server may be configured to enable a communication between a respective target server and the network device only in case the network device is labelled as authenticated.

To prevent access on the target server by unauthenticated entities the loT-authentication server may be configured to allow a communication with a target server only for network devices that have been labelled as authenticated. Thus, every network device has to register at the loT-authentication server in order to get an authentication-label before a communication with the target server is established.

In order to exclude network devices that have not been labelled by the loT-authentication server yet, from a communication with the target server, the loT-authentication server may be configured to work as a relay or gateway between a communication interface for communication with a network device and the target server.

According to an embodiment, the processor of the loT-authentication server is further configured to communicate with the public communication network device via a gateway such as a network server.

A network server is a server that registers a SIM-card for communication via a public communication network, such a GSM-network, for example. Thus, a SIM-card has to be registered at the network server before any communication via the public communication network can be established. As the network server requests and stores unique identification of a particular SIM-card, the information, in particular the unique identification of a particular SIM-card stored in the network server can be used by the loT-authentication server. Accordingly, a registration process at a network server may be linked with an authentication process at the loT-authentication server.

For executing an authentication process, the network server may forward a unique identification of a particular SIM-card to the loT-authentication server. Alternatively, the loT-authentication server may request a unique identification of a particular SIM-card at the network server in case an authentication label is requested by a target server or a network device starts an authentication process at the loT-authentication server.

According to a further embodiment, the unique identification of the network device comprises an IMEI and/or a MAC-address of the network device.

According to still a further embodiment, the unique identification of the SIM-card comprises at least an International Mobile Subscriber Identity (IMSI), and/or a Mobile Station Integrated Services Digital Network Number (MS-ISDN) and/or an integrated circuit card identifier (ICCID).

According to a second aspect, the present invention relates to an authentication system for authentication of a network device. The authentication system comprises an embodiment of the loT-authentication server, and a target server. The target server comprises a processor configured to request an authentication process at the loT-authentication server or at a network server which is in communicative connection with the loT-authentication server, in case a network device contacting the target server has not been labelled by the loT-authentication server yet, and to allow a registration for a network device at the target server only in case the loT-authentication server labelled the network device as authenticated.

The target server of the authentication system may be connected to the loT-authentication server by a communication interface and may exchange information with the loT-authentication server in order to request for an authentication-label of a network device, for example.

According to a third aspect, the present invention relates to a computer implemented authentication method for authentication of a network device having a SIM-card with a unique identification. The authentication method comprises the following steps:
a) storing a dataset linking a unique identification of the SIM-card and a given set of specific credentials in a memory of an loT-authentication server,
b) receiving an authentication request comprising a candidate unique identification of the network device and a candidate set of credentials;
c) retrieving a unique identification of the network device specified in a network layer of the network transmitting the authentication request; and
d) generating an authentication-label for labelling the network device as authenticated only in case the unique identification of the network device specified in the network layer of the network transmitting the authentication request matches the candidate unique identification of the network device specified in the authentication request, and the candidate set of credentials transmitted to the loT-authentication server from the network device using the SIM-card matches the specific credentials linked with the unique identification of the SIM-card in the dataset.

The computer implemented authentication method may be carried out by the loT-authentication server or the authentication system described herein.

According to a fourth aspect, the present invention relates to a computer implemented credential authentication method for authentication of a network device having a SIM-card, the credential authentication method comprising the following steps:
a) storing a dataset linking a unique identification of the SIM-card and a given set of specific credentials in a memory of an loT-authentication server,
b) generating an authentication-label for labelling the network device as authenticated only in case a candidate set of credentials transmitted to the IoT-authentication server from the network device using the SIM-card matches the specific credentials linked with the unique identification of the SIM-card in the dataset.

According to a fifth aspect, the present invention relates to a computer implemented network authentication method for authentication of a network device having a SIM-card, the network authentication method comprising the following steps:
a) receiving an authentication request comprising a candidate unique identification of the network device,
b) retrieving a unique identification of the network device specified in a network layer of the network transmitting the authentication request; and
c) generating an authentication-label for labelling the network device as authenticated only in case the unique identification of the network device specified in the network layer of the network transmitting the authentication request matches the candidate unique identification of the network device specified in the authentication request.

According to a sixth aspect, the present invention relates to a non-transitory computer readable medium having stored thereon software instructions that, when executed by a processor, cause the processor to generate control signals for controlling an loT-authentication server for authentication of a network device having a SIM-card with a unique identification, by executing the steps according to any of the authentication method, the credential authentication method, and the network authentication method.

The foregoing features and advantages of the present invention will be appreciated still more precisely from the following description, with reference to the accompanying drawings in which:
Figure 1 is an overview of an authentication system according to an embodiment of the present invention, comprising an loT-authentication server according to an embodiment of the present invention and a network server.
Figure 2 is an overview of an authentication method according to an embodiment of the present invention.

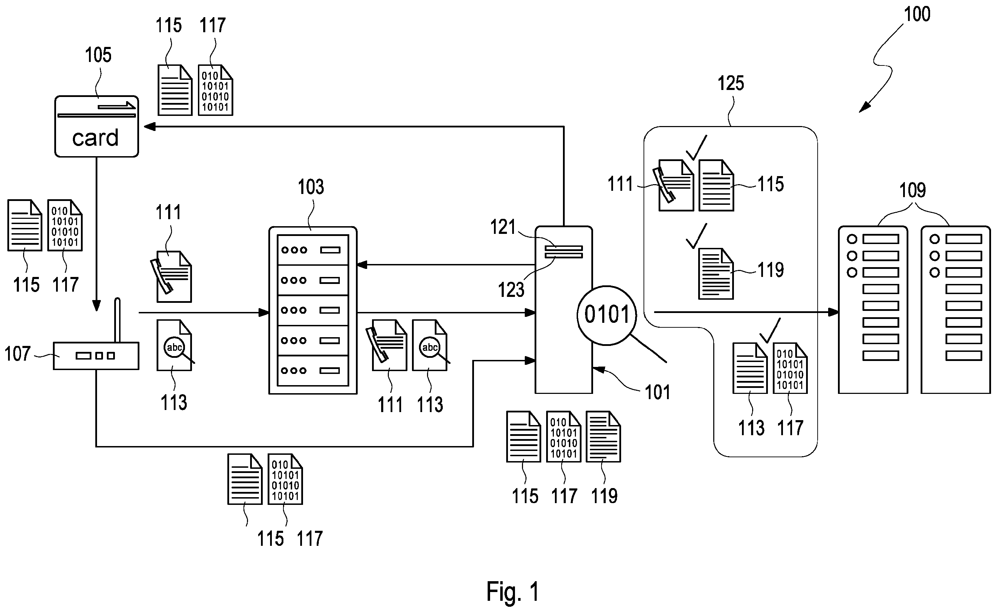

In Figure 1, an authentication system 100 is shown. The authentication system 100 comprises an loT-authentication server 101 and a network server 103.

The network server 103 manages account details of a SIM-card 105 used by a network device 107 for communication with a target server 109 via a public communication network.

For communication via the public communication network, the SIM-card 105 has to be registered at the network server 103 in a registration process, where a unique identification (IdSIM) 111 of the SIM-card 105 is registered at the network server 103. Thus, the network server 103 is configured to communicate with the SIM-card 105 via the public communication network, such as a GSM-network, for example.

For communication in an authenticated system with the target server 109, the SIM-card 105 has to be authenticated at the loT-authentication server 101 in an authentication process. Thus, the loT-authentication server 101 is configured to accept traffic from the SIM-card 105 via the network server 103 of the public communication network, such as a GSM-network, for example.

In order to communicate with the target server 109, the network device 107 itself needs to be authenticated as well. For authentication of the network device 107, the network device 107 registers at the network server 103 during a first connection with the public communication network and submits the IdSIM 111 to the network server 103. For this submission of the IdSIM 111, an IdN 113 of the network device 107 is transmitted in a network layer of a public communication network used by the SIM-card 105. This IdN 113 is only accessible and ed-itable by a provider of the public communication network.

For authentication of the network device 107, the network device 107 submits an authentication request to the loT-authentication server 101 via a message comprising a set of candidate credentials 115, such as a key and a secret, for example, and a candidate IdN 117 as specified by the network device 107 itself in an application layer of the message. Additionally, the network server 103 provides the loT-authentication server 101 with the IdSIM 111 and the IdN 113 for transmission of the message according to the authentication request.

In response to receiving the authentication request, the loT-authentication server 101 generates an authentication-label for labelling the network device 107 as authenticated in case the IdN 113 specified in the network layer of the public communication network transmitting the authentication request matches the candidate IdN 117 specified in the application layer of the authentication request by the network device 107 itself.

Additionally, or alternatively, the loT-authentication server 101 generates an authentication-label for labelling the network device 107 as authenticated in case the candidate set of credentials 115 matches a specific set of credentials linked with the IdSIM 111 in a dataset 119 stored in a memory 123 of the loT-authentication server 101 in a production process of the SIM-card 105.

In case the network device 107 has been labelled as authenticated by the loT-authentication server 101, an authentication label 125 is transmitted to the target server 109 specifying that the candidate set of credentials 115 matches the specific set of credentials linked with the IdSIM 111 in the dataset 119 and/or the IdN 113 matches the candidate IdN 117.

The network server 103 may be configured to provide the IdSIM 111 and the IdN 113 automatically every time the network device 107 tries to register at the target server 109. Alternatively, the loT-authentication server 101 may be configured to ask for the IdSIM 111 and the IdN 113 every time the network device 107 tries to register at the target server 109 and sends an authentication request comprising the candidate set of credentials 115 and the candidate IdN 117.

For executing logic operations underlying the operations carried out by the loT-authentication server 101, the loT-authentication server 101 comprises a processor 121, which may a central processing unit, an application-specific integrated circuit (ASIC) or any other programmable hardware device interacting with the memory 123 of the loT-authentication server 101.

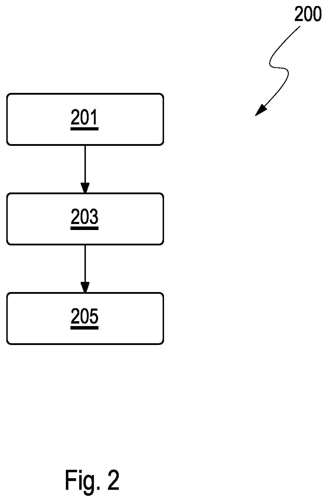

In Figure 2 a method 200 for authentication of a network device having a SIM-card is shown.

The method 200 comprises a storage step 201 for storing a dataset linking a unique identification of the SIM-card and a given set of specific credentials in a memory of an loT-authentication server, a receiving step 203 for receiving an authentication request from the network device comprising a candidate unique identification of the network device and a candidate set of credentials, a retrieving step 205 for retrieving a unique identification of the network device specified in a network layer of the network transmitting the authentication request, and an authentication step 207 for generating an authentication-label for labelling the network device as authenticated only in case the unique identification of the network device specified in the network layer of the network transmitting the authentication request matches the candidate unique identification of the network device specified in the authentication request, and/or in case the candidate set of credentials transmitted to the loT-authentication server from the network device using the SIM-card matches the specific credentials linked with the unique identification of the SIM-card in the dataset.

## Claims

1. loT-authentication server (101) for authentication of a network device (107) with a SIM-card (105), the loT-authentication server (101) comprising:
- a processor (121) configured to:
- store a dataset (119) linking a unique identification (111) of the SIM-card (105) and a given set of specific credentials in a memory (123) of the loT-authentication server (101),
- receive an authentication request comprising a candidate unique identification (117) of the network device (107) and a candidate set of credentials (115);
- retrieve a unique identification (113) of the network device (107) specified in a network layer of a public communication network transmitting the authentication request; and
- generate an authentication-label (125) for labelling the network device (107) as authenticated only in case the unique identification (113) of the network device (107) specified in the network layer of the public communication network transmitting the authentication request matches the candidate unique identification (117) of the network device (107) specified in the authentication request, and the candidate set of credentials (115) transmitted to the loT-authentication server (101) from the network device (107) using the SIM-card (105) matches the specific credentials linked with the unique identification (111) of the SIM-card (105) in the dataset (119),
wherein the processor (121) is further configured to:
- enable a communication between a target server (109) and the network device (107) only in case the network device is labelled as authenticated, and
- communicate with the network device (107) via a gateway (103) of the public communication network,
wherein the gateway (103) is a network -server (103) that is configured to register the SIM-card for communication via the public communication network.

2. Authentication system (100) for authentication of a network device (107), the authentication system (100) comprising:
- an loT-authentication server (101) according to claim 1,
- a target server (109);
wherein the target server (109) comprises a processor configured to:
- request an authentication process at the loT-authentication server (101) or at the network server (103), that is in operative connection with the loT-authentication server (101), in case a network device (107) contacting the target server (109) has not been labelled as authenticated by the loT-authentication server (101) yet, and to
- allow a registration for the network device (107) at the target server (109) only in case the loT-authentication server (101) has labelled the network device (107) as authenticated.

3. Computer implemented authentication method (200) for authentication of a network device (107) having a SIM-card (105),
the authentication method comprising the following steps:
a) storing (201) a dataset (119) linking a unique identification (111) of the SIM-card (105) and a given set of specific credentials in a memory (123) of an loT-authentication server (101),
b) receiving (203) an authentication request comprising a candidate unique identification (117) of the network device (107) and a candidate set of credentials (115);
c) retrieving (205) a unique identification (113) of the network device (107) specified in a network layer of a public communication network transmitting the authentication request; and
d) generating (207) an authentication-label (125) for labelling the network device (107) as authenticated only in case the unique identification (113) of the network device (107) specified in the network layer of the public communication network transmitting the authentication request matches the candidate unique identification (117) of the network device (107) specified in the authentication request, and
in case the candidate set of credentials (115) transmitted to the loT-authentication server (101) from the network device (107) using the SIM-card (105) matches the specific credentials linked with the unique identification of the SIM-card (105) in the dataset (119), e) enabling a communication between a target server (109) and the network device (107), by the IoT-authentication server (101), only in case the network device is labelled as authenticated,
wherein communicating with the network device (107) is carried out via a gateway (103) of the public communication network, and wherein the gateway (103) is a network -server (103) that is configured to register the SIM-card for communication via the public communication network.

4. A non-transitory computer readable medium having stored thereon software instructions that, when executed by a processor (121), cause the processor (121) to generate control signals for controlling an loT-authentication server (101) for authentication of a network device having a SIM-card with a unique identification, by executing the steps according to claim 3.

## Patentansprüche

1. loT-Authentifizierungsserver (101) zur Authentifizierung einer Netzwerkvorrichtung (107) mit einer SIM-Karte (105), wobei der loT-Authentifizierungsserver (101) Folgendes umfasst:
- einen Prozessor (121), der dazu konfiguriert ist:
- einen Datensatz (119), der eine eindeutige Kennung (111) der SIM-Karte (105) und einen gegebenen Satz spezifischer Berechtigungsnachweise verknüpft, in einem Speicher (123) des loT-Authentifizierungsservers (101) zu speichern,
- eine Authentifizierungsanfrage zu empfangen, die eine eindeutige Kandidatenkennung (117) der Netzwerkvorrichtung (107) und einen Kandidatensatz von Berechtigungsnachweisen (115) umfasst;
- eine eindeutige Kennung (113) der Netzwerkvorrichtung (107) abzurufen, die in einer Netzwerkschicht eines öffentlichen Kommunikationsnetzwerks spezifiziert ist, das die Authentifizierungsanfrage überträgt; und
- ein Authentifizierungslabel (125) zu erzeugen, um die Netzwerkvorrichtung (107) nur dann als authentifiziert zu kennzeichnen, wenn die eindeutige Kennung (113) der Netzwerkvorrichtung (107), die in der Netzwerkschicht des die Authentifizierungsanforderung übertagenden öffentlichen Kommunikationsnetzwerks spezifiziert ist, mit der eindeutigen Kandidatenkennung (117) der in der Authentifizierungsanforderung spezifizierten Netzwerkvorrichtung (107) übereinstimmt, und der Kandidatensatz von Berechtigungsnachweisen (115), der von der Netzwerkvorrichtung (107) unter Verwendung der SIM-Karte (105) an den loT-Authentifizierungsserver (101) übertragen wird, mit den spezifischen mit der eindeutigen Kennung (111) der SIM-Karte (105) in dem Datensatz (119) verknüpften Berechtigungsnachweisen übereinstimmt,
wobei der Prozessor (121) ferner dazu konfiguriert ist:
- eine Kommunikation zwischen einem Zielserver (109) und der Netzwerkvorrichtung (107) nur dann zu ermöglichen, wenn die Netzwerkvorrichtung als authentifiziert gekennzeichnet ist, und
- über ein Gateway (103) des öffentlichen Kommunikationsnetzwerks mit der Netzwerkvorrichtung (107) zu kommunizieren,
wobei das Gateway (103) ein Netzwerkserver (103) ist, der dazu konfiguriert ist, die SIM-Karte für das Kommunizieren über das öffentliche Kommunikationsnetzwerk zu registrieren.

2. Authentifizierungssystem (100) zur Authentifizierung einer Netzwerkvorrichtung (107), wobei das Authentifizierungssystem (100) Folgendes umfasst:
- einen loT-Authentifizierungsserver (101) nach Anspruch 1,
- einen Zielserver (109);
wobei der Zielserver (109) einen Prozessor umfasst, der dazu konfiguriert ist:
- einen Authentifizierungsprozess beim loT-Authentifizierungsserver (101) oder beim Netzwerkserver (103), der in operativer Verbindung mit
dem loT-Authentifizierungsserver (101) steht, anzufordern, falls eine Netzwerkvorrichtung (107), die den Zielserver (109) kontaktiert, noch nicht vom loT-Authentifizierungsserver (101) als authentifiziert gekennzeichnet wurde, und
- eine Registrierung für die Netzwerkvorrichtung (107) auf dem Zielserver (109) nur dann zuzulassen, wenn der loT-Authentifizierungsserver (101) die Netzwerkvorrichtung (107) als authentifiziert gekennzeichnet hat.

3. Computerimplementiertes Authentifizierungsverfahren (200) zur Authentifizierung einer eine SIM-Karte (105) aufweisende Netzwerkvorrichtung (107),
wobei das Authentifizierungsverfahren die folgenden Schritte umfasst:
a) Speichern (201) eines Datensatzes (119), der eine eindeutige Kennung (111) der SIM-Karte (105) und einen gegebenen Satz spezifischer Berechtigungsnachweise in einem Speicher (123) eines loT-Authentifizierungsservers (101) verknüpft,
b) Empfangen (203) einer Authentifizierungsanfrage, die eine eindeutige Kandidatenkennung (117) der Netzwerkvorrichtung (107) und einen Kandidatensatz von Berechtigungsnachweisen (115) umfasst;
c) Abrufen (205) einer eindeutigen Kennung (113) der Netzwerkvorrichtung (107), die in einer Netzwerkschicht eines die Authentifizierungsanfrage übertragenden öffentlichen Kommunikationsnetzwerks spezifiziert ist; und
d) Erzeugen (207) eines Authentifizierungslabels (125), um die Netzwerkvorrichtung (107) nur dann als authentifiziert zu kennzeichnen, wenn die eindeutige Kennung (113) der in der Netzwerkschicht des die Authentifizierungsanforderung übertragenden öffentlichen Kommunikationsnetzwerks spezifizierten Netzwerkvorrichtung (107) mit der eindeutigen Kandidatenkennung (117) der in der Authentifizierungsanforderung spezifizierten Netzwerkvorrichtung (107) übereinstimmt und
wenn der von der Netzwerkvorrichtung (107) unter Verwendung der SIM-Karte (105) an den loT-Authentifizierungsserver (101) übertragene Kandidatensatz von Berechtigungsnachweisen (115) mit den spezifischen mit der eindeutigen Kennung der SIM-Karte (105) im Datensatz (119) verknüpften Berechtigungsnachweisen übereinstimmt;
e) Ermöglichen einer Kommunikation zwischen einem Zielserver (109) und der Netzwerkvorrichtung (107) durch den loT-Authentifizierungsserver (101) nur dann, wenn die Netzwerkvorrichtung als authentifiziert gekennzeichnet ist,
wobei das Kommunizieren mit der Netzwerkvorrichtung (107) über ein Gateway (103) des öffentlichen Kommunikationsnetzwerks durchgeführt wird, und
wobei das Gateway (103) ein Netzwerkserver (103) ist, der dazu konfiguriert ist, die SIM-Karte für das Kommunizieren über das öffentliche Kommunikationsnetzwerk zu registrieren.

4. Nicht-transitorisches computerlesbares Medium, das darauf gespeicherte Softwarebefehle aufweist, die, wenn sie von einem Prozessor (121) ausgeführt werden, den Prozessor (121) veranlassen, Steuersignale zum Steuern eines loT-Authentifizierungsservers (101) zur Authentifizierung einer eine SIM-Karte mit einer eindeutigen Kennung aufweisende Netzwerkvorrichtung zu erzeugen, indem die Schritte gemäß Anspruch 3 ausgeführt werden.

## Revendications

1. Serveur d'authentification IdO (101) permettant d'authentifier un dispositif de réseau (107) doté d'une carte SIM (105), le serveur d'authentification IdO (101) comprenant :
- un processeur (121) configuré pour :
- stocker un ensemble de données (119) reliant une identification unique (111) de la carte SIM (105) et un ensemble donné d'identifiants spécifiques dans une mémoire (123) du serveur d'authentification IdO (101) ;
- recevoir une demande d'authentification comprenant une identification unique candidate (117) du dispositif de réseau (107) et un ensemble candidat d'identifiants (115) ;
- récupérer une identification unique (113) du dispositif de réseau (107), spécifiée dans une couche de réseau d'un réseau de communication public transmettant la demande d'authentification et
- générer un label d'authentification (125) pour étiqueter le dispositif de réseau (107) comme étant authentifié uniquement si l'identification unique (113) du dispositif de réseau (107), spécifiée dans la couche de réseau du réseau de communication public transmettant la demande d'authentification, correspond à l'identification unique candidate (117) du dispositif de réseau (107), spécifiée dans la demande d'authentification, et que l'ensemble candidat d'identifiants (115) transmis au serveur d'authentification IdO (101) par le dispositif de réseau (107) utilisant la carte SIM (105) correspond aux identifiants spécifiques liés à l'identification unique (111) de la carte SIM (105) dans l'ensemble de données (119),
le processeur (121) étant en outre configuré pour :
- permettre une communication entre un serveur cible (109) et le dispositif de réseau (107) uniquement si le dispositif de réseau est étiqueté comme étant authentifié et
- communiquer avec le dispositif de réseau (107) par l'intermédiaire d'une passerelle (103) du réseau de communication public,
la passerelle (103) étant un serveur de réseau (103) configuré pour enregistrer la carte SIM en vue d'une communication via le réseau de communication public.

2. Système d'authentification (100) permettant d'authentifier un dispositif de réseau (107), le système d'authentification (100) comprenant :
- un serveur d'authentification IdO (101) selon la revendication 1,
- un serveur cible (109) ;
le serveur cible (109) comprenant un processeur configuré pour :
- demander un processus d'authentification au serveur d'authentification IdO (101) ou au serveur de réseau (103), qui est en connexion opérationnelle avec le serveur d'authentification IdO (101), si un dispositif de réseau (107) contactant le serveur cible (109) n'a pas encore été étiqueté comme étant authentifié par le serveur d'authentification IdO (101), et pour
- permettre un enregistrement du dispositif de réseau (107) sur le serveur cible (109) uniquement si le serveur d'authentification IdO (101) a étiqueté le dispositif de réseau (107) comme étant authentifié.

3. Procédé d'authentification mis en œuvre par ordinateur (200) permettant d'authentifier un dispositif de réseau (107) doté d'une carte SIM (105),
le procédé d'authentification comprenant les étapes suivantes :
a) le stockage (201) d'un ensemble de données (119) reliant une identification unique (111) de la carte SIM (105) et un ensemble donné d'identifiants spécifiques dans une mémoire (123) d'un serveur d'authentification IdO (101),
b) la réception (203) d'une demande d'authentification comprenant une identification unique candidate (117) du dispositif de réseau (107) et un ensemble candidat d'identifiants (115) ;
c) la récupération (205) d'une identification unique (113) du dispositif de réseau (107), spécifiée dans une couche de réseau d'un réseau de communication public transmettant la demande d'authentification et
d) la génération (207) d'un label d'authentification (125) pour étiqueter le dispositif de réseau (107) comme étant authentifié uniquement si l'identification unique (113) du dispositif de réseau (107), spécifiée dans la couche de réseau du réseau de communication public transmettant la demande d'authentification, correspond à l'identification unique candidate (117) du dispositif de réseau (107), spécifiée dans la demande d'authentification, et que l'ensemble candidat d'identifiants (115) transmis au serveur d'authentification IdO (101) par le dispositif de réseau (107) utilisant la carte SIM (105) correspond aux d'identifiants spécifiques liés à l'identification unique de la carte SIM (105) dans l'ensemble de données (119),
e) l'activation d'une communication entre un serveur cible (109) et le dispositif de réseau (107), par le serveur d'authentification IdO (101), uniquement si le dispositif de réseau est étiqueté comme étant authentifié, la communication avec le dispositif de réseau (107) s'effectuant par l'intermédiaire d'une passerelle (103) du réseau de communication public, et la passerelle (103) étant un serveur de réseau (103) configuré pour enregistrer la carte SIM en vue d'une communication via le réseau de communication public.

4. Support informatique non transitoire sur lequel sont stockées des instructions logicielles qui, exécutées par un processeur (121), amènent le processeur (121) à générer des signaux de commande pour piloter un serveur d'authentification IdO (101) permettant d'authentifier un dispositif de réseau doté d'une carte SIM avec une identification unique, en exécutant les étapes selon la revendication 3.
